# EUROPÄISCHE PATENTSCHRIFT

(11) **EP 1 549 866 B1**
(45) Veröffentlichungstag und Bekanntmachung des Hinweises auf die Patenterteilung: **06.12.2006**
(21) Anmeldenummer: 03807737.6
(22) Anmeldetag: 09.10.2003
(51) Int. Cl.: F16H 61/22, F16H 59/10

(54) **FAHRSTUFEN-EINGABEEINHEIT**
GEAR INPUT UNIT
UNITE D'ENTREE DE RAPPORTS DE VITESSE

(30) Priorität: 09.10.2002 DE 10247068
(43) Veröffentlichungstag der Anmeldung: 06.07.2005
(73) Patentinhaber: ZF Lemförder Metallwaren AG, 49448 Lemförde (DE)
(72) Erfinder: GIEFER, Andreas, 49448 Lemförde (DE); MEYER, Jörg, 49419 Wagenfeld (DE)
(86) Internationale Anmeldenummer: PCT/DE2003/003382
(87) Internationale Veröffentlichungsnummer: WO 2004/033939

(56) Entgegenhaltungen:
- EP-A- 0 584 985
- EP-A- 1 018 612
- EP-A- 1 062 439
- EP-A- 1 146 259
- US-A- 4 324 151

## Beschreibung

Die vorliegende Erfindung bezieht sich auf das Sperren bzw. Freigeben von Betätigungselementen speziell bei einem einer Fahrstufen-Eingabeeinheit für ein Automatik-Getriebe in Fahrzeugen. Die Erfindung betrifft insbesondere eine manuelle Fahrstufen-Eingabeeinheit mit mehreren Betätigungselementen, wie beispielsweise einem Wählhebel und einem Taster.

Im Fahrzeugbau werden Automatik-Getriebe eingesetzt die verschiedene Fahrstufen zur Verfügung stellen. Die Fahrstufen - abgekürzt mit P,R,N und D (P=Park, R=Reverse, N=Neutral, D=Drive) - können vom Fahrer mit einem Wählhebel bzw. einem Taster angewählt werden. Bei modernen Fahrzeugen wird die vom Fahrer ausgewählte Fahrstufe über eine entsprechende Elektronik abgetastet und elektronisch an die Getriebeelektronik übertragen, die das Getriebe entsprechend verstellt. Dabei entfällt die früher übliche mechanische Verbindung zwischen dem Getriebe und der manuellen Fahrstufen-Eingabeeinheit (Wählhebel und/oder Taster). Dieses Konzept wird allgemein als "Shift-by-wire-Schaltung" bezeichnet.

Shift-by-wire-Schaltungen haben das grundsätzliche Problem, dass bei Getriebenotlauf bzw. bei Ausfall der Kfz-Elektronik (Ausfall des Getriebesteuergerätes, Ausfall der Schaltungselektronik, Leitungsunterbrechung, Ausfall der Spannungsversorgung, usw.) das Getriebe die Befehle des Fahrers nicht mehr ausführen kann bzw. das Getriebe nicht mehr konfiguriert werden kann.

Aus EP 1062 439 B1 ist bei einer solchen Situation eine optische, akustische oder haptische (taktile) Rückmeldung an den Fahrer bekannt. Eine haptische Rückmeldung wird beispielsweise durch eine Erhöhung oder Reduzierung der Betätigungskraft dargestellt. Derartige haptische aber auch optische und akustische Rückmeldungen werden vom Fahrer nicht immer sicher erkannt, im schlimmsten Fall werden sie sogar ignoriert.

Eine garantiert nicht übersehbare Rückmeldung stellt das Sperren bzw. Festsetzen des entsprechenden Betätigungselementes dar. Dadurch erkennt der Fahrer sofort, dass die gewünschte Getriebe-Einstellung nicht ausgeführt bzw. umgesetzt werden kann.

Eine derartige Sperrung eines einzigen Betätigungselementes für konventionelle Schaltungen (Seilzug- oder Stangenverbindung zum Getriebe) ist bekannt. Insbesondere bei herkömmlichen Automatikschaltungen werden unter gewissen Bedingungen die Fahrstufen PARK und NEUTRAL gesperrt.

Bei Shift-by-wire-Schaltungen besteht die Möglichkeit die Anwahl der verschiedenen Fahrstufen (P, R, N, D) auf zwei oder mehrere Betätigungselemente (beispielsweise Wählhebel und Taster) aufzuteilen bzw. in die manuelle Fahrstufen-Eingabeeinheit weitere Betätigungselemente, die nicht zur Bedienung des Getriebes dienen sondern andere Funktionen haben, aufzunehmen.

Aus der gattungsgemäßen US-A-4 324 151 ist eine manuelle Eingabe-Einheit bekannt, wobei durch eine manuelle Sperre zwei Bedienungselemente gleichzeitig gesperrt werden können.

Aufgabe der vorliegenden Erfindung ist es daher eine hinsichtlich der Bedienelemente mehrkomponentige manuelle Eingabe-Einheit bereitzustellen in der eine gleichzeitige Sperrung aller Komponenten unter gewissen Randbedingungen durchgeführt werden kann.

Die oben genannte Aufgabe wird durch eine manuelle Fahrstufen-Eingabeeinheit gemäß den Merkmalen des Anspruchs 1 gelöst. Die abhängigen Ansprüche bilden den zentralen Gedanken der Erfindung in besonders vorteilhafter Weise weiter.

Beansprucht wird gemäß der vorliegenden Erfindung eine manuelle Fahrstufen-Eingabeeinheit zum Auswählen von Fahrstufen mit einem ersten Betätigungselement zum Auswählen zumindest einer Fahrstufe und zumindest einem weiteren Betätigungselement zur Einstellung weiterer Funktionen. Erfindungsgemäß ist dabei eine mittels eines Aktuators bewegbare Sperrklinke vorgesehen, durch welche das erste und das zumindest eine weitere Betätigungselement gleichzeitig verriegelt und entriegelt werden können.

Insbesondere ist die erfindungsgemäße Fahrstufen-Eingabeeinheit derart ausgebildet, dass sich mindestens zwei Betätigungselemente in ihrer Funktionsweise unterscheiden.

Dabei kann das erste Betätigungselement einen Wählhebel und das zweite Betätigungselement einen Taster darstellen.

Die Sperrklinke ist erfindungsgemäß so angeordnet, dass in einer ersten Position der Sperrklinke alle Betätigungselemente verriegelt sind und daher nicht betätigt werden können und in einer zweiten Position der Sperrklinke alle Betätigungselemente entriegelt sind und betätigt werden können.

Vorteilhafterweise wird die erste Position durch mechanische Federkraft und die zweite Position durch elektrische Aktivierung des Aktuators eingenommen.

In einer bevorzugten Ausführungsform der Erfindung stellt der Wählhebel einen monostabilen Wählhebel dar, der nach dem manuellen Auslenken in zumindest eine Richtung wieder in seine Ausgangslage zurückkehrt.

Ebenso kehrt der Taster nach seiner Betätigung wieder in seine Ausgangslage zurück.

Im Sinne einer einfachen Bedienweise der Fahrstufen-Eingabeeinheit stellt der Aktuator vorzugsweise einen Elektromagneten dar.

In einer weiteren Ausführungsform der Erfindung weist die Fahrstufen-Eingabeeinheit eine Mehrzahl von Betätigungselementen auf, wobei durch eine entsprechende Anordnung relativ zur Sperrklinke ein erster Teil dieser Betätigungselemente verriegelt und gleichzeitig der andere Teil entriegelt werden kann.

Weitere Merkmale, Eigenschaften und Vorteile der vorliegenden Erfindung werden nunmehr anhand von Ausführungsbeispielen und unter Bezugnahme auf die begleitenden Figuren der Zeichnungen erläutert.
- Figur 1: zeigt eine perspektivische Sicht von schräg oben vorne auf eine erfindungsgemäße manuelle Fahrstufen-Eingabeeinheit mit einem in einem Gehäuse teilweise integrierten Wählhebel und einem Taster als Betätigungselemente,
- Figur 2: zeigt schematisch einen Schnitt durch die wesentlichsten Komponenten der erfindungsgemäßen manuellen Fahrstufen-Eingabeeinheit im verriegelten Zustand der beiden Betätigungselemente,
- Figur 3: zeigt schematisch einen Schnitt durch die wesentlichsten Komponenten der erfindungsgemäßen manuellen Fahrstufen-Eingabeeinheit im entriegelten und betätigten Zustand beider Betätigungselemente,
- Figur 4: zeigt eine perspektivische Sicht von schräg oben hinten auf eine erfindungsgemäße manuelle Fahrstufen-Eingabeeinheit mit einem Wählhebel und einem Taster als Betätigungselemente ohne Gehäuse im verriegelten Zustand,
- Figur 5: zeigt eine perspektivische Sicht von schräg oben hinten auf eine erfindungsgemäße manuelle Fahrstufen-Eingabeeinheit mit einem Wählhebel und einem Taster als Betätigungselemente ohne Gehäuse im entriegelten Zustand.

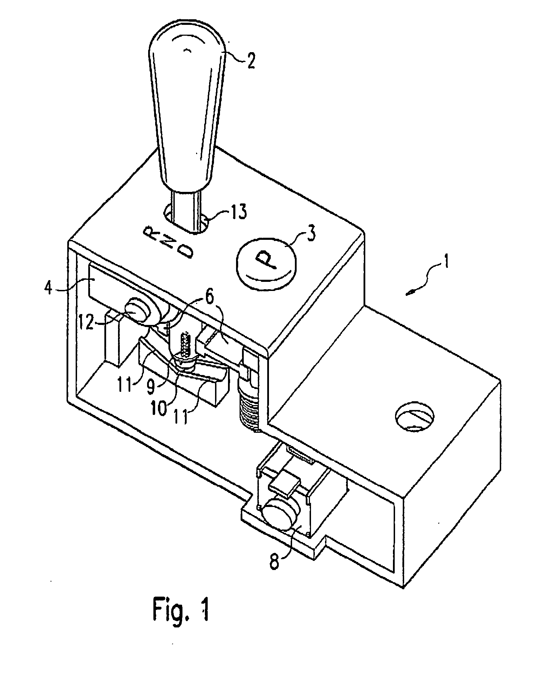

Figur 1 zeigt eine perspektivische Sicht von schräg oben vorne auf ein Ausführungsbeispiel einer erfindungsgemäßen manuellen Fahrstufen-Eingabeeinheit 1. In diesem Ausführungsbeispiel weist die Fahrstufen-Eingabeeinheit 1 zwei Betätigungselemente in Form eines Wählhebels 2 sowie eines Tasters 3 auf.

Das untere Ende des Wählhebels (Einrast-Pin 10) wird durch eine im unteren Teil des Hebel-Schaftes integrierte Druckfeder 9 gegen eine keilförmige Einrast-Kontur 11 gedrückt, so dass nach einer Auslenkung des Wählhebels um den Wählhebel-Drehpunkt 12 wieder die ursprünglich mittlere Position des Hebels eingenommen wird. Dieses Verhalten des Wählhebels 2 wird als monostabiles Verhalten bezeichnet, da der Wählhebel stets eine bevorzugte mittlere Position einnimmt. Durch Antippen und damit Auslenken des Wählhebels in der in das Gehäuse oder dessen Abdeckung eingeschnittenen Gasse 13 nach vorne oder nach hinten ist es dem Fahrer möglich eine andere Fahrstufe zu wählen, zum Beispiel falls die vorher ausgewählte Fahrstufe N (NEUTRAL) war, kann R (REVERSE) durch Antippen nach vorne sowie D (DRIVE) durch Antippen nach hinten gewählt werden. Falls die zuletzt ausgewählte Fahrstufe D war, kann durch einmaliges Antippen nach vorne die Fahrstufe N und durch zweimaliges Antippen die Fahrstufe R gewählt werden. Durch eine spezielle Aufnahme-Sensorik 4 für den Wählhebel wird die zuletzt gewählte Fahrstufe abgetastet und elektronisch an die Getriebeelektronik weitergegeben.

Die Fahrstufe P (PARK) kann der Fahrer gemäß dem Ausführungsbeispiel der Figur 1 unabhängig von der Wählhebeleinstellung durch Drücken des Tasters 3 anwählen. Nach dem Betätigen des Tasters 3 kehrt dieser ebenfalls wieder in seine Ausgangsstellung zurück.

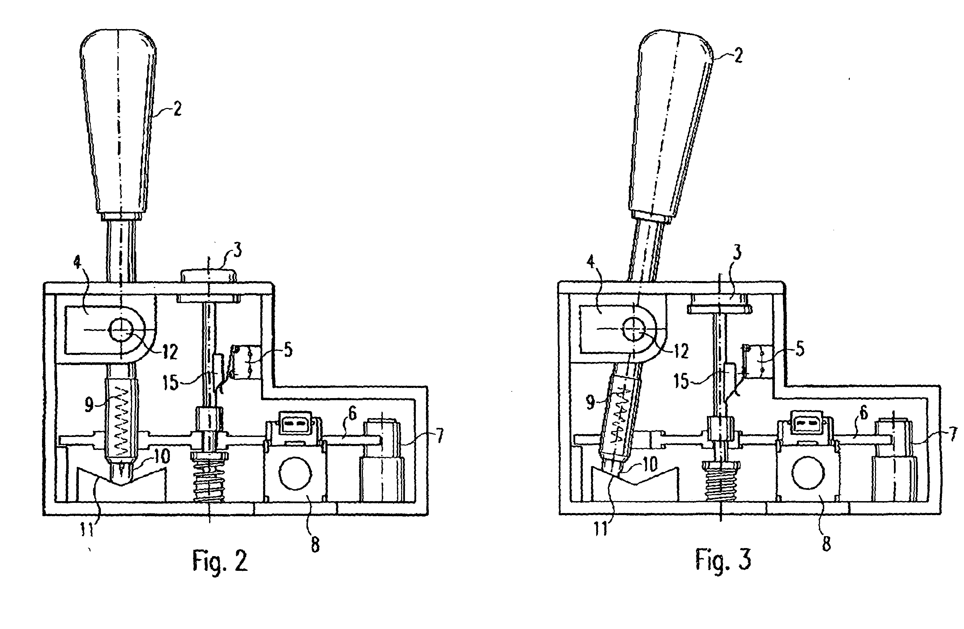

In Figur 2 ist die erfindungsgemäße manuelle Fahrstufen-Eingabeeinheit des obigen Ausführungsbeispieles von der Seite dargestellt. Der Wählhebel 2 befindet sich im nichtausgelenkten Zustand, der Taster 3 ist nicht aktiviert. Der Schaft des Tasters 3 hat eine Protuberanz 15 in Höhe eines Sensors 5. Der Sensor 5 weist einen Kontakthebel auf der im nicht-aktivierten Zustand (Figur 1) des Tasters 3 geöffnet ist. Bei Betätigung des Tasters schließt die Protuberanz 15 den Kontakthebel des Sensors 5 (Figur 2). Der Kontaktschluss bewirkt den entsprechenden elektrischen Befehl an das Getriebe in diesem Fall die Fahrstufe P (PARK) einzunehmen.

Um beispielsweise bei Ausfall der elektrischen Kommunikation dem Fahrer eine sichere nicht zu ignorierende Rückmeldung zu geben, dass die Betätigung der manuellen Fahrstufen-Eingabeeinheit keinerlei Wirkung mehr hat ist in der manuellen Fahrstufen-Eingabeeinheit eine Sperrklinke 6 vorgesehen die an einem Ende 7 schwenkbar gelagert ist. Durch Schwenken der Sperrklinke 6 erfolgt ein Eingriff der Sperrklinke 6 in die beiden Betätigungselemente (Wählhebel 2 und Taster 3) so dass eine Arretierung dieser Betätigungselemente 2,3 erfolgt. In diesem Ausführungsbeispiel wird der Eingriff durch Aussparungen der Sperrklinke 6 auf Höhe des Tasterschaftes sowie des nichtausgelenkten Wählhebelschaftes realisiert. Genauso kann aber auch der Schaft des jeweiligen Betätigungselementes eine Aussparung aufweisen in die die Sperrklinke eingeschwenkt wird. Durch die Arretierung ist eine Sperrung der beiden Betätigungselemente derart gegeben, dass der Wählhebel 2 nicht mehr bewegt und der Taster 3 nicht mehr gedrückt werden kann.

Das Schwenken der Sperrklinke 6 wird einerseits durch einen Aktuator 8 (z.B. ein Elektromagnet) andererseits durch eine Rückstellfeder bewirkt. Sinnvollerweise ist also auch die Sperrklinke 6 monostabil und zwar in der Weise, dass im stromlosen Zustand der manuellen Fahrstufen-Eingabeeinheit 1 die Rückstellfeder ein gegenseitiges Eingreifen der Sperrklinke 6 mit den Betätigungselementen 2,3 und damit eine Arretierung bewirkt. Die freigebende Position der Sperrklinke 6 ist vorzugsweise durch die bestromte Stellung des Aktuators 8 gegeben, so dass bei Ausfall der Energiezufuhr (Spannungsversorgung) allein durch die rein mechanische Rückstellkraft der Rückstellfeder die Betätigungselemente 2,3 gesperrt werden.

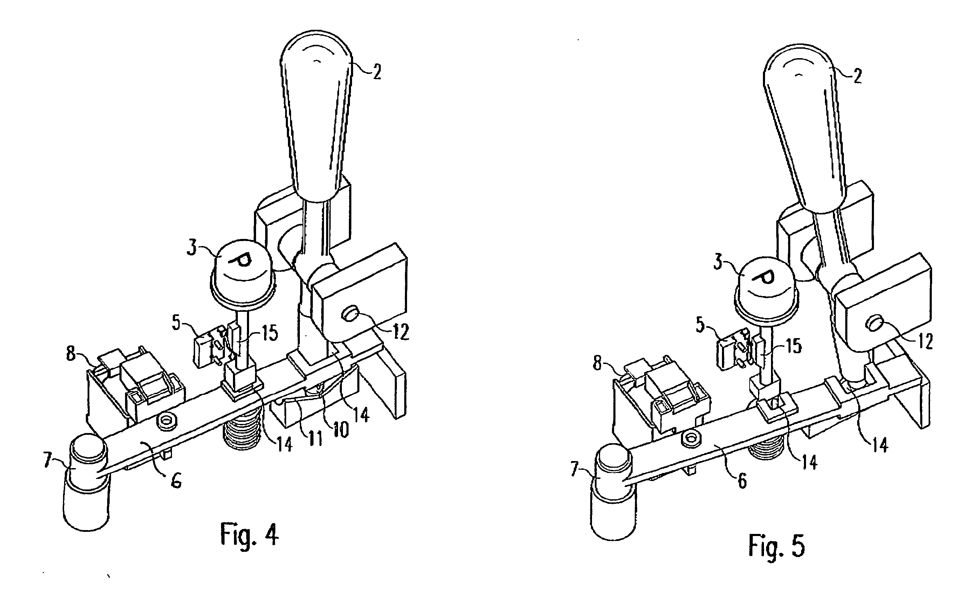

In den Figuren 4 und 5 ist der erfindungsgemäße Mechanismus zur Arretierung der beiden unterschiedlichen Betätigungselement (Wählhebel 2 und Taster 3) deutlich dargestellt:

Die Sperrklinke 6 ist in der Figur 4 so angeordnet, dass die Aussparungen 14 den Schaft der jeweiligen Betätigungselementes umfassen, so dass einerseits der Wählhebel 2 aus seiner Ausgangsstellung nicht mehr ausgelenkt und andererseits der Taster 3 nicht mehr gedrückt werden kann. Figur 4 beschreibt die Situation bei Wegfall der elektrischen Energiezufuhr, bei der durch die Vorspannung einer Rückstellfeder der Eingriff der Sperrklinke in die Betätigungselemente und deren Sperrung bewirkt wird. Ein Kippen bzw. Antippen des Wählhebels 2 und ein Niederdrücken des Tasters 3 ist in diesem Zustand nicht mehr möglich, wodurch dem Fahrer bewusst gemacht wird, dass die Kontrolle über das Getriebe und damit eine Fahrstufenauswahl nicht mehr möglich ist.

In Figur 5 ist die Situation bei vorhandener elektrischer Energie dargestellt. Durch Bestromung des Aktuators 8 wird die Sperrklinke gegen die Kraft der Rückstellfeder ausgelenkt und die Schäfte beider Betätigungselemente freigegeben, so dass ein Kippen bzw. Antippen des Wählhebels 2 sowie ein Drücken des Tasters 3 möglich ist. Beide Betätigungselemente 2,3 sind aktiviert, d.h. der Wählhebel 2 kann verkippt werden und der Taster 3 kann gedrückt werden, wobei die Protuberanz 15 den Kontakt des Taster-Sensors 5 schließt. Nur zur Verdeutlichung sind in Figur 4 sowohl der Wählhebel 2 verkippt als auch der Taster 3 gedrückt dargestellt, obwohl in der Praxis die gleichzeitige Aktivierung eher unwahrscheinlich ist.

Die Figuren 1 bis 5 zeigen nur eine mögliche Ausgestaltung der Erfindung. Genauso können durch eine andere Ausführung des Wählhebels 3 (beispielsweise durch eine weitere Gasse oder durch weitere Wählhebel) alle Fahrstufen P,R,N,D angewählt werden während ein weiteres Betätigungselement oder überhaupt weitere Betätigungselemente (wie beispielsweise der Taster) nicht unbedingt zur Bedienung des Getriebes dienen muss. Dabei können die einzelnen Betätigungselemente in entsprechender Gruppierung gleichzeitig gesperrt oder freigegeben werden. Möglich wäre z.B. eine Ausführung mit zwei Wählhebeln, wobei mit dem einen Hebel die Fahrstufen P,R,N,D eingelegt werden können und mit dem anderen Wählhebel die Gänge manuell geschaltet werden können (z.B. schrittweises Schalten der Gänge 1 bis 5). Genauso können aber auch sämtliche Fahrstufen durch mehrere Taster angewählt werden (je eine Taste für P,R,N und D) die unter gewissen Bedingungen gesperrt oder freigegeben werden.

### Bezugszeichenliste

- 1: Manuelle Fahrstufen-Eingabeeinheit
- 2: Wählhebel
- 3: Taster
- 4: Sensorik für Wählhebel
- 5: Sensor für Taster
- 6: Sperrklinke
- 7: Lagerstelle Sperrklinke
- 8: Aktuator (z.B. Elektromagnet)
- 9: Druckfeder
- 10: Einrast-Pin
- 11: Einrast-Kontur
- 12: Wählhebel-Drehpunkt
- 13: Gasse
- 14: Aussparung in der Sperrklinke
- 15: Protuberanz am Tasterschaft

## Patentansprüche

1. Manuelle Fahrstufen-Eingabeeinheit (1) zum Auswählen von Fahrstufen mit einem ersten Betätigungselement (2) zum Auswählen zumindest einer Fahrstufe und zumindest einem weiteren Betätigungselement (3) zur Einstellung weiterer Funktionen, wobei
eine bewegbare Sperrklinke (6) vorgesehen ist, durch welche das erste und das zumindest eine weitere Betätigungselement (2,3) gleichzeitig verriegelt und entriegelt werden könne,
**dadurch gekennzeichnet, daß**
die Sperrklinke durch einen Aktuator bewegt wird.

2. Manuelle Fahrstufen-Eingabeeinheit (1) nach Anspruch 1,
**dadurch gekennzeichnet, dass**
sich mindestens zwei Betätigungselemente in ihrer Funktionsweise unterscheiden.

3. Manuelle Fahrstufen-Eingabeeinheit (1) nach Anspruch 2,
**dadurch gekennzeichnet, dass**
die Einheit (1) aus zwei unterschiedlichen Betätigungselementen besteht, wobei das erste Betätigungselement einen Wählhebel (2) und das zweite Betätigungselement einen Taster (3) darstellt.

4. Manuelle Fahrstufen-Eingabeeinheit (1) nach Anspruch 1, 2 oder 3,
**dadurch gekennzeichnet, dass**
die Sperrklinke (6) so angeordnet ist, dass in einer ersten Position der Sperrklinke (6) alle Betätigungselemente (2, 3) verriegelt sind und daher nicht betätigt werden können und in einer zweiten Position der Sperrklinke (6) alle Betätigungselemente (2, 3) entriegelt sind und betätigt werden können.

5. Manuelle Fahrstufen-Eingabeeinheit (1) nach Anspruch 4,
**dadurch gekennzeichnet, dass**
die erste Position durch mechanische Federkraft
und die zweite Position durch elektrische Aktivierung des Aktuators (8) eingenommen wird.

6. Manuelle Fahrstufen-Eingabeeinheit (1) nach Anspruch 5,
**dadurch gekennzeichnet, dass**
der Wählhebel ein monostabiler Wählhebel ist, der nach dem manuellen Auslenken in zumindest eine Richtung wieder in seine Ausgangslage zurückkehrt.

7. Manuelle Fahrstufen-Eingabeeinheit (1) nach einem der Ansprüche 5 bis 6,
**dadurch gekennzeichnet, dass**
der Taster nach seiner Betätigung wieder in seine Ausgangslage zurückkehrt.

8. Manuelle Fahrstufen-Eingabeeinheit (1) nach einem der Ansprüche 1 bis 7,
**dadurch gekennzeichnet, dass**
der Aktuator (8) ein Elektromagnet ist.

9. Manuelle Fahrstufen-Eingabeeinheit (1) nach einem der Ansprüche 1 bis 4,
**dadurch gekennzeichnet, dass**
die Eingabeeinheit (1) eine Mehrzahl von Betätigungselementen aufweist, wobei durch eine entsprechende Anordnung relativ zur Sperrklinke ein erster Teil dieser Betätigungselemente verriegelt und gleichzeitig der andere Teil entriegelt werden kann.

## Claims

1. Manual gear-stage input unit (1) for selecting gear stages having a first actuating element (2) for selecting at least one gear stage and having at least one further actuating element (3) for setting further functions, wherein a movable locking pawl (6) is provided, by means of which the first and the at least one further actuating element (2, 3) may be simultaneously locked and unlocked,
**characterized in that**
the locking pawl (6) is moved by means of an actuator.

2. Manual gear-stage input unit (1) according to claim 1,
**characterized in that**
at least two actuating elements differ in their mode of operation.

3. Manual gear-stage input unit (1) according to claim 2,
**characterized in that**
the unit (1) comprises two different actuating elements, wherein the first actuating element is a selector lever (2) and the second actuating element is a push-button switch (3).

4. Manual gear-stage input unit (1) according to claim 1, 2 or 3,
**characterized in that**
the locking pawl (6) is disposed in such a way that in a first position of the locking pawl (6) all of the actuating elements (2, 3) are locked and therefore may not be actuated and in a second position of the locking pawl (6) all of the actuating elements (2, 3) are unlocked and may be actuated.

5. Manual gear-stage input unit (1) according to claim 4,
**characterized in that**
the first position is taken up by means of mechanical spring force
and the second position is taken up by means of electrical activation of the actuator (8).

6. Manual gear-stage input unit (1) according to claim 5,
**characterized in that**
the selector lever is a monostable selector lever that, after the manual deflection in at least one direction, returns to its basic position.

7. Manual gear-stage input unit (1) according to one of claims 5 to 6,
**characterized in that**
the push-button switch after its actuation returns to its basic position.

8. Manual gear-stage input unit (1) according to one of claims 1 to 7,
**characterized in that**
the actuator (8) is an electromagnet.

9. Manual gear-stage input unit (1) according to one of claims 1 to 4,
**characterized in that**
the input unit (1) has a plurality of actuating elements, wherein by virtue of a corresponding arrangement relative to the locking pawl a first group of said actuating elements may be locked and at the same time the other group may be unlocked.

## Revendications

1. Unité d'engagement de position manuelle (1) destinée à sélectionner des positions, laquelle unité comporte un premier élément d'actionnement (2) destiné à sélectionner au moins une position et au moins un autre élément d'actionnement (3) destiné à régler d'autres fonctions,
un cliquet de blocage déplaçable (6) étant prévu qui permet de verrouiller et déverrouiller simultanément le premier élément d'actionnement et l'au moins un autre élément d'actionnement (2, 3),
**caractérisée en ce que** le cliquet de blocage est déplacé par un actionneur.

2. Unité d'engagement de position manuelle (1) selon la revendication 1, **caractérisée en ce que** l'on fait la distinction entre les modes de fonctionnement d'au moins deux éléments actionnement.

3. Unité d'engagement de position manuelle (1) selon la revendication 2, **caractérisée en ce que** l'unité (1) est constituée de deux éléments d'actionnement différents, le premier élément d'actionnement étant un levier de sélection (2) et le deuxième élément d'actionnement étant un bouton (3).

4. Unité d'engagement de position manuelle (1) selon la revendication 1, 2 ou 3, **caractérisée en ce que** le cliquet de blocage (6) est disposé de telle sorte que tous les éléments actionnement (2, 3) sont verrouillés dans une première position du cliquet de blocage (6) et ne peuvent donc pas être actionnés et tous les éléments d'actionnement (2, 3) sont déverrouillés dans une deuxième position du cliquet de blocage (6) et peuvent être actionnés.

5. Unité d'engagement de position manuelle (1) selon la revendication 4, **caractérisée en ce que** la première position est occupée grâce à la force mécanique d'un ressort et la deuxième position est occupée en activant électriquement l'actionneur (8).

6. Unité d'engagement de position manuelle (1) selon la revendication 5, **caractérisée en ce que** le levier sélecteur est un levier sélecteur monostable qui retourne dans sa position de départ après l'avoir déplacé manuellement dans au moins une direction.

7. Unité d'engagement de position manuelle (1) selon l'une des revendications 5 à 6, **caractérisée en ce que** le bouton retourne dans sa position de départ après avoir été actionné.

8. Unité d'engagement de position manuelle (1) selon l'une des revendications 1 à 7, **caractérisée en ce que** l'actionneur (8) est un électroaimant.

9. Unité d'engagement de position manuelle (1) selon l'une des revendications 1 à 4, **caractérisée en ce que** l'unité d'engagement de position manuelle comporte plusieurs éléments d'actionnement, un agencement approprié par rapport au cliquet de blocage permettant de verrouiller une première partie de ces éléments d'actionnement et de déverrouiller simultanément l'autre partie.
